# EUROPEAN PATENT APPLICATION

(11) **EP 3 379 022 A1**
(43) Date of publication of application: **26.09.2018**
(21) Application number: 17162045.3
(22) Date of filing: 21.03.2017
(51) Int. Cl.: E21B 47/00

(54) **DOWNHOLE SENSOR SYSTEM**

(71) Applicant: Welltec A/S, 3450 Allerød (DK)
(72) Inventor: NESGAARD, Carsten, 3450 Allerød (DK)
(74) Representative: Hoffmann Dragsted A/S

(57) **Abstract**

The present invention relates to a downhole sensor system (100), comprising a plurality of sensor units (10) forming a mesh network (130), wherein each one of said sensor units is positioned in a cemented annulus (2) formed between a casing (1) and a borehole wall (3), and at least one of said sensor units is provided with a detector (16) for detecting cement characteristics of the cement in the annulus. Furthermore, the present invention relates to a method for providing a downhole sensor system and to a method for determining cement characteristics.

## Description

### Field of the invention

The present invention relates to a downhole sensor system, comprising a plurality of sensor units forming a mesh network. Furthermore, the present invention relates to a method for providing a downhole sensor system and to a method for determining cement characteristics.

### Background art

Wells are usually provided with a casing. The casing, being in the form of a rigid pipe, is assembled and inserted in the drilled borehole. Cementing of the casing is typically performed in order to seal against the formation to prevent blowouts. During such cementing operation, non-set cement is pushed downwards through the casing, normally by means of a cement shoe. When the bottom end of the casing is reached, the cement will start to flow out from the bottom of the casing and into the radial space, or annulus, formed between the outer wall of the casing and the drilled borehole. By continuing to push the cement downwards, eventually all cement present inside the casing will flow upwards on the exterior of the casing until the cement shoe reaches the bottom of the casing. Once the cement is set, the casing will be fixedly arranged inside the borehole, and if the cement is not prevented from flowing freely to surround the casing, the cement provides a proper seal against blowouts, and further drilling may be performed. Hence, this process may be repeated for each casing/liner inserted until the desired depth of the borehole is reached.

For evaluating the integrity of the cementing and thus detect any gaps or non-cemented areas, a cement bond Log is used. The cement bond Log, which contains an analysis of the cementing, is provided by lowering a sonic tool and transmitting and receiving sonar pulses along the length of the casing. By analysing the reflected signal, preferably in terms of amplitude, it is possible to determine any integrity issue as the received signal will represent the acoustic impedance of the area surrounding the sonic tool.

Although this method is used extensively, it would be advantageous to provide a faster method for determining cement integrity.

### Summary of the invention

It is an object of the present invention to wholly or partly overcome the above disadvantages and drawbacks of the prior art. More specifically, it is an object to provide an improved method and system for rapid and automatic detection of any discrepancy of the cement integrity, in particular without the need of lowering separate tools in the casing.

The above objects, together with numerous other objects, advantages and features, which will become evident from the below description, are accomplished by a solution in accordance with the present invention by a downhole sensor system, comprising:
- a plurality of sensor units forming a mesh network, wherein each one of said sensor units is positioned in a cemented annulus formed between a casing and a borehole wall, and at least one of said sensor units is provided with a detector for detecting cement characteristics of the cement in the annulus.

By having a plurality of sensor units distributed in the curing/setting cement, a mesh network can be formed by the sensor units, and each sensor unit measuring the cement characteristics of the surrounding cement can send this information to an adjacent sensor unit which again sends its own cement measurements along with the received information from the lower sensor unit. This is repeated until the information reaches surface. If a sensor unit detects cement all the way around itself, the sensor unit may send only an "Okay" signal to the adjacent sensor unit, and if a sensor unit detects an uncemented area, the sensor unit may send only a "non-okay" signal in order to simplify the data to be sent to surface. Once having the position of the sensor unit sending the "non-okay" signal, a tool can be submerged opposite that area only. In another embodiment, all the measurements of the cement characteristics from the sensor units are sent to surface and analysed so no further cement Log needs to be run.

Cement characteristics may comprise acoustic impedance, and the detector may comprise a transducer for measuring a reflected signal for determining the acoustic impedance.

Also, each one of said sensor units may be randomly positioned in the cemented annulus.

The downhole sensor system according to the present invention may further comprise a sensor module comprising additional sensors.

Said sensor module may comprise a temperature sensor and/or a pressure sensor.

Moreover, each sensor unit may be configured to receive wirelessly transmitted data from an adjacent sensor unit, and to forward the received data to adjacent sensor units.

Further, the downhole sensor system according to the present invention may comprise a surface system configured to receive downhole data from said sensor units.

Also, said surface system may be further configured to determine the position of at least one sensor unit, and to associate said determined position with associated cement characteristics.

Furthermore, the surface system may be configured to determine the position of at least one sensor unit by Monte Carlo simulation and/or Shortest Path simulation and/or acoustic pinging time of flight.

The mesh network may be a self-healing mesh network.

The present invention also relates to a method for providing a downhole sensor system according to the present invention, comprising:
- entering a plurality of sensor units in non-set cement,
- entering said non-set cement into a casing, and
- pushing said non-set cement downwards such that the cement is pushed upwards in an annulus formed between the casing and the borehole wall, whereby each sensor unit is positioned in said annulus.

Moreover, each sensor unit may be randomly positioned in said annulus.

Further, the present invention relates to a method for determining cement characteristics, comprising:
- providing a sensor system by performing the method for providing a downhole sensor system according to the present invention,
- activating at least one sensor unit for measuring cement characteristics,
- transmitting data corresponding to said measured cement characteristics from the activated sensor unit to a surface system via at least one adjacent sensor unit, and
- analysing the received data in order to determine cement characteristics.

This method may further comprise determining the position of said activated sensor unit, and associating said determined position with the corresponding cement characteristics received by said surface system.

Also, activating at least one sensor unit may comprise transmitting a sonar pulse by means of a transducer, and receiving an echo signal.

### Brief description of the drawings

The invention and its many advantages will be described in more detail below with reference to the accompanying schematic drawings, which for the purpose of illustration show some non-limiting embodiments and in which
Figs. 1A and 1B show casing cementing according to prior art,
Figs. 2A and 2B show casing cementing according to an embodiment,
Fig. 3 is a schematic view of a sensor system according to an embodiment,
Fig. 4 is a schematic view of a sensor unit for use with a sensor system according to an embodiment,
Fig. 5 is a diagram showing data communication between different sensor units of a sensor system according to an embodiment,
Fig. 6 is a schematic view of a method of providing a downhole sensor system according to an embodiment,
Fig. 7 is a schematic view of a method of determining cement characteristics according to an embodiment, and
Fig. 8 is a schematic view of a self-powering device of a sensor unit.

All the figures are highly schematic and not necessarily to scale, and they show only those parts which are necessary in order to elucidate the invention, other parts being omitted or merely suggested.

### Detailed description of the invention

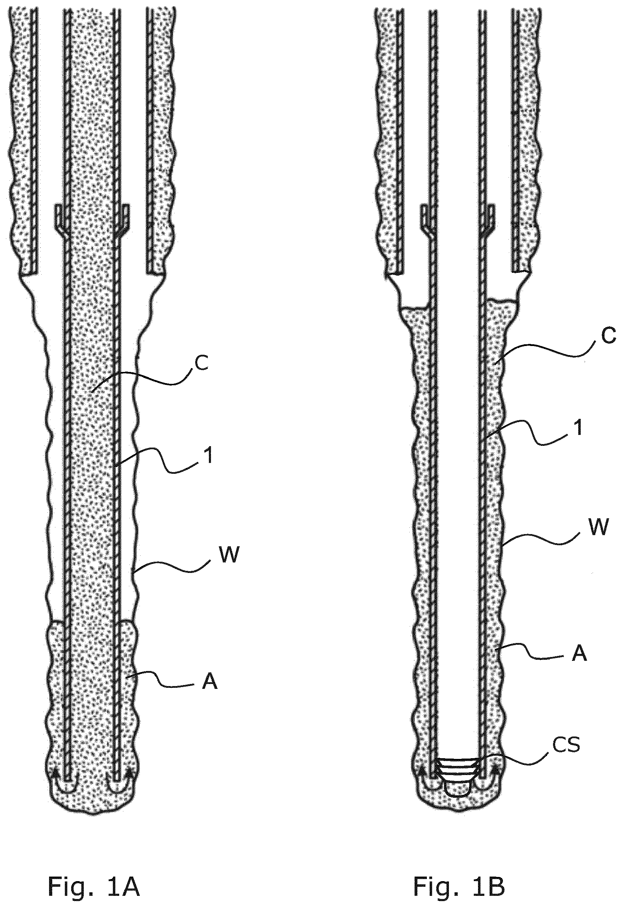

Figs 1A and 1B show a process for cementing a casing according to prior art solutions. The cement C is introduced inside the casing 1 and flows downwards towards the bottom end of the casing 1 and then on the outside of the casing as indicated with arrows. Typically, a fluid (not shown) is used to displace a cement shoe CS and thus the cement C. During cementing, the cement C will reach the bottom end of the casing 1 and start to flow upwards in the annulus A formed between the casing 1 and the walls W of the borehole. As is shown in Fig. 1B, this upward flow of cement C is continued until the entire amount of cement C is displaced and the cement shoe reaches the bottom of the casing. Once the cement sets, it will provide a rigid positioning of the casing 1 for sealing against the borehole.

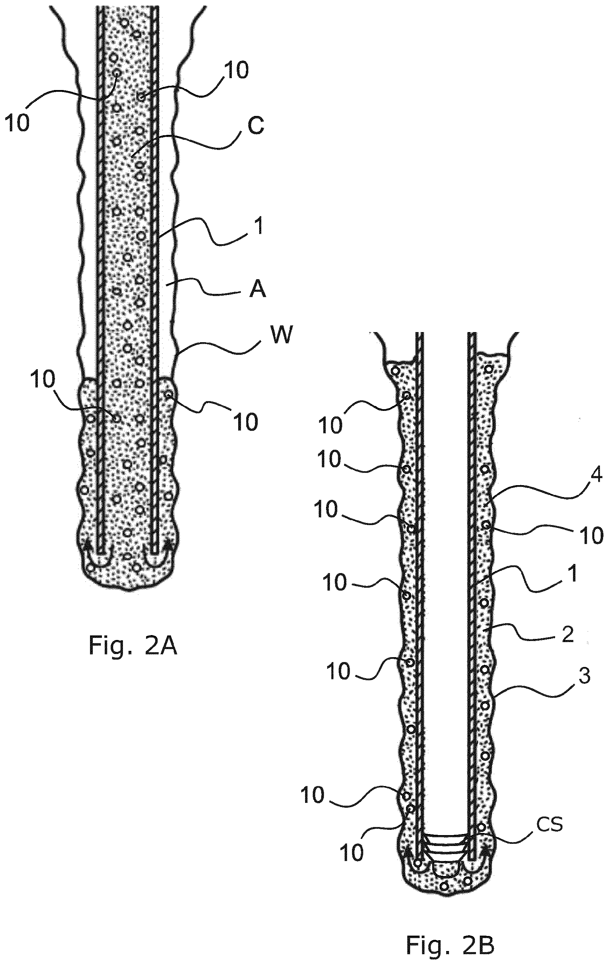

Now turning to Figs. 2A and 2B, a process for cementing a casing according to an embodiment of the present invention is schematically shown. Although the general principle of cementing is identical to the process shown in Figs. 1A-B, a significant difference is that the non-set cement is provided with a plurality of individual sensor units 10. Each sensor unit 10 is positioned arbitrarily in the flowable cement, and the distribution of sensor units 10 is thus random though distributed into the cement in an evenly manner so that the sensor units 10 are more or less evenly distributed in the flowable cement. As the cement is pushed upwards in the annulus 2, the sensor units 10 will follow the cement 4 as it fills the annulus 2. After completing the cementing process, as shown in Fig. 2B, the sensor units 10 will be randomly distributed in the annulus 2 both in the axial direction, i.e. along the longitudinal extension of the casing 1, in the radial direction, and in the circumferential direction. It should be noted that only some of the sensor units 10 have been assigned the reference numeral "10" in Figs. 2A and 2B; however, all circular elements shown in these figures represents a sensor unit 10.

Further, although the description above relates to cementing of casing, the general principle of using the sensor units 10 may be applicable for cementing other well tubular structures such as tubings, liners etc.

The sensor units 10 are entered in the cement 4 in order to form "smart cement", i.e. to provide information to the surface relating to cement characteristics along the borehole over time, i.e. not only during the cementing procedure, but also in a period after the cement is set/cured. As will be explained in the following, this is realised by configuring the sensor units 10 to establish a physically distributed independent and localised sensing network, preferably with peer-to-peer communication architecture. As will be understood from the following description, the mesh network being established by the sensor units 10 as a self-healing mesh network will automatically provide for a reliable and self-healing data path even though at least some of the sensor units 10 are out of range from the final destination, i.e. the data collection provided at the surface level.

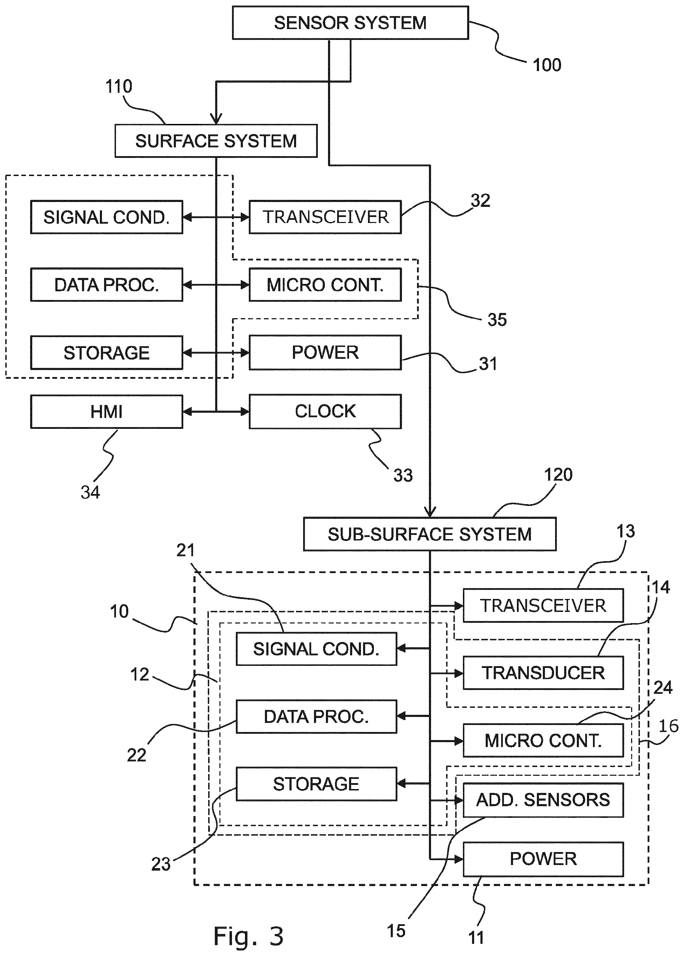

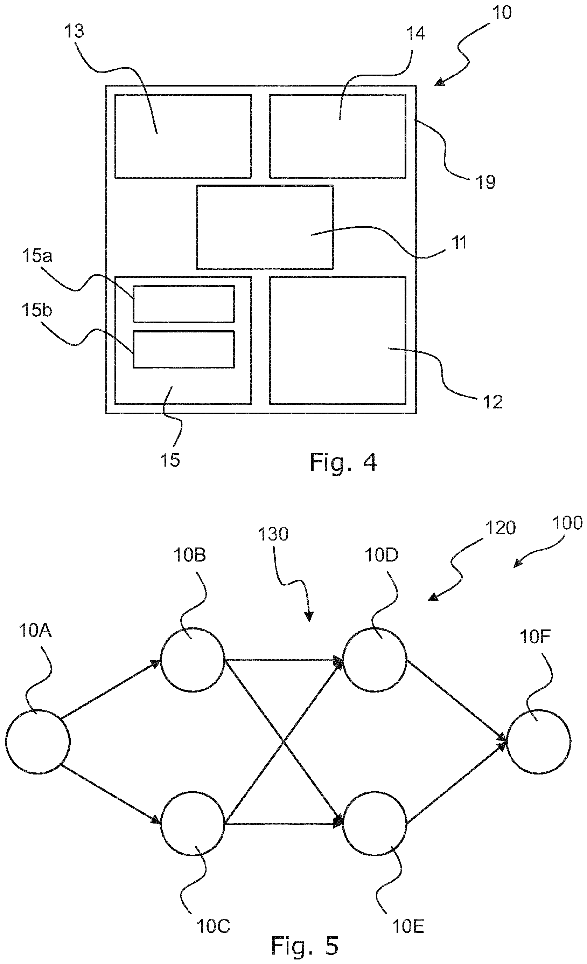

All sensor units 10 are preferably identical, although provided with a unique ID. An example of a sensor system 100 is schematically shown in Fig. 3. The sensor system 100 comprises a surface system 110 and a sub-surface system 120. The sub-surface system 120 comprises a plurality of sensor units 10, although only one sensor is shown in Fig. 3. Each sensor unit 10 is provided with a number of components configured to provide various functionality to the sensor unit 10. As is shown in Fig. 3, each sensor unit 10 includes a power supply 11, a digital processing unit 12, a transceiver 13, a transducer 14, and optionally a sensor module 15 comprising additional sensors. The sensor module 15 may e.g. comprise a temperature sensor 15a and/or a pressure sensor 15b as shown in Fig. 4. The transducer 14, together with the digital processing unit 12, form a detector 16 for determining cement characteristics. In particular, the cement characteristics include acoustic impedance, whereby it is possible to determine the cement integrity by analysing the acoustic impedance and thus determine if the cement job is performed in a satisfactory manner without any pockets without cement. The detector 16 can for example be used together with the digital processing unit 12 to form a detecting unit for determining position data of the sensor unit 10.

For example, the transducer 14 is configured to transmit a sonar pulse into the surrounding cement 4, and to receive an echo signal of the transmitted pulse. The digital processing unit 12 is configured to receive the echo signal and to perform various analysing algorithms in order to provide an output representing the cement characteristics. Alternatively, the analysing algorithms are provided at the surface level, i.e. by means of the surface system 110.

The analysing algorithms may e.g. be configured to determine compressional-wave transit time, amplitude and/or attenuation per unit distance. All these parameters are well known in the field of cement bond logging, and will not be described further herein.

The power supply 11 is configured to supply power to the other components 12-15 of the sensor unit 10, either by means of an internal power storage, such as one or more batteries, or by converting energy of the surrounding cement 4 to electrical energy. For the latter, the power supply 11 may include a piezo element being configured to convert mechanical vibrations of the surrounding cement 4 to electrical energy. Optionally, a capacitor may be included in the power supply 11 for temporarily storing harvested energy.

The digital processing unit 12 comprises a signal conditioning module 21, a data processing module 22, a data storage module 23, and a micro controller 24. The digital processing unit 12 is configured to control operation of the entire sensor unit 10, as well as temporarily storing sensed data in the memory 23 of the data storage module 23.

The transceiver 13 is configured to provide wireless communcation with transceivers of adjacent sensor units 10. For this, the transceiver 13 comprises a radio communication module and an antenna. The radio communication module may be configured to communicate according to well-established radio protocols, e.g. IEEE 801.1aq (Shortest Path Bridging), IEEE 802.15.4 (ZigBee) etc.

The transducer 14 is configured to transmit and receive sonar signals/pulses in order to determine characteristics of the surrounding cement 4.

The sensor module 15 preferably comprises one or more additional sensors, such as pressure and/or temperature sensors.

The surface system 110 also comprises a number of components for providing the desired functionality of the entire sensor system 100. As is shown in Fig. 3, the surface system 110 has a power supply 31 for providing power to the various components. As the surface system 110 may be permanently installed, the power supply 31 may be connected to mains power, or it may be constituted by one or more batteries. The surface system 110 also comprises a transceiver 32 for receiving data communicated from the sensor units 10, and also for transmitting data and control signals to the sensor units 10. Hence, the transceiver 32 is provided with a radio communication module and an antenna for allowing for communication between the surface system 110 and the sensor units 10 of the sub-surface system 120. The surface system 110 also comprises a clock 33, a human-machine interface 34 and a digital processing unit 35. The digitial processing unit 35 comprises the same functionality as the digital processing unit 12 of the sensor unit 10, i.e. a signal conditioning module, a data processing module, a data storage module, and a micro-controlling module.

Before describing the operation of the sensor system 100, a sensor unit 10 is schematically shown in Fig. 4. The sensor unit 10 has a housing 19 which is configured to enclose the components previously described, as well as to form a protective casing which is capable of withstanding the high loads from the surrounding cement. Although shown as rectangular, the shape of the housing 19 may of course be chosen differently. For example, it may be advantageous to provide the housing 19 with only rounded corners. The housing 19 may for such embodiment have a spherical shape. Inside the housing 19, the following is fixedly mounted: the power supply 11, the digital processing unit 12, the transceiver 13, the transducer 14 and optionally the sensor module 15. These components are preferably the same as those described with reference to Fig. 3.

Now turning to Fig. 5, the configuration of the sensor system 100 will be described further, and in particular the downhole or sub-surface system 120. The sensor units 10A-F, representing parts of a sub-surface system 120, are randomly distributed in the annulus 2. The communication between the sensor units 10A-F is preferably based on a relay model, which means that the surface system communicates with the sensor units 10A-F via a sensor unit network. Preferably, each signal being transmitted from a sensor unit 10A-F comprises information relating to a unique ID of the sensor unit 10A-F. Further, cross-talk is reduced by limiting the number of possible re-transmissions between the sensor units 10A-F.

Each sensor unit 10A-F is preferably configured to operate in two different modes. The first mode, relating to activation for the purpose of receiving data relating to the cement charcteristics, preferably comprises a step of gathering data (optionally including data from the additional sensors 15A, 15B shown in Fig 4), and transmitting the data upon request. In the second mode the sensor units 10A-F are configured to re-transmit received signals.

The axial location of each sensor unit 10A-F is preferably determined by a round-trip elapsed time measured by the surface system 110. The surface system 110 may thus be configured to ping a specific sensor unit 10A-F using the unique ID, whereby the specific sensor unit 10A-F replies by transmitting a response signal with a unique tag. The surface system 110 receives the transmitted signal with elapsed times, and either Monte Carlo simulation and/or Shortest Path simulation may be used to determine the specific position of the sensor unit 10A-F.

Using Monte Carlo simulation, a simulated sensor unit location model may be created having a uniform probability distribution. For such method it may be possible to assume that the sensor units 10A-F are randomly distributed over a specific casing length, and that these locations are known in the simulated model. The simulated model also includes a relay model with specific individual sensor processing delays.

For each distribution, the shortest round-trip travel time is calculated for each sensor units 10A-F. This results in a map of travel time versus location of sensor units 10A-F. It is then possible to compare the measured elapsed time with the map to determine the location of the sensor unit 10A-F.

For Shortest Path simulation, once the surface system 110 pings a sensor unit 10A-F, the round-trip times of multiple received signals, each one from a specific relay path, is recorded. The shortest time for the particular sensor unit 10A-F is then determined by calculating the distance from the surface system 110 using the speed of light.

It would also be possible to use the detectors 16/transducers 14 of the sensor units 10A-F for determining the distance between adjacent sensor units 10A-F. As the sonic pulse transmitted by the transducer 14 will travel with the speed of sound, more time for computing will be available. Hence the transducer 14 is used not only for cement bond evaluation, but also for distance measurements. The radio communication module may also be used for the distance measurements, e.g. in smart mud. All information will, however, be communicated wirelessly using radio frequency. For example, the sensor units 10A-F may be programmed to transmit a signal, via the transceiver, to its neighbouring sensor units 10A-F, whereby the signal contains information that a sonic pulse will be transmitted at a predetermined time, e.g. 10 ms from transmittance of the signal. When one of the neighbouring sensor units 10A-F detects the transmitted sonic pulse, it is possible, for each receiving sensor unit 10A-F, to determine the time elapsed from transmission of the sonic pulse to receipt of the sonic pulse. The time of flight for the acoustic pulse is then converted to a distance between the transmitting sensor unit 10A-F and each receiving sensor unit 10A-F.

In the example shown in Fig. 5, each sensor unit 10A-F forms a node in the mesh network 130. Each node is configured to receive and transmit data signals, as well as to add ID and time stamp with each data package. Each node will send a signal corresponding to its current state (i.e. the detected signals representing cement characteristics) asynchronously with respect to other nodes. In the table below, data communication in the mesh network 130 is explained further. In the table, nX represents the node ID, TnX represents the time stamp for the particular node, and sX represents the sensed data from the particular node.

| **Node** | **Forwarded signal** | **Received signal** |
|---|---|---|
| 10A | nA:TnA:sA | |
| 10B | nB:TnB:nA:TnA:sA | nA:TnA:sA |
| 10C | nC:TnC:nA:TnA:sA | nA:TnA:sA |
| 10D | | nB:TnB:nA:TnA:sA |
| | | nC:TnC:nA:TnA:sA |
| | nD:TnD: nB:TnB: nA:TnA:sA | |
| | nD:TnD: nC:TnC: nA:TnA:sA | |
| 10E | | nB:TnB:nA:TnA:sA |
| | | nC:TnC:nA:TnA:sA |
| | nE:TnE:nB:TnB:nA:TnA:sA | |
| | nE:TnE:nC:TnC:nA:TnA:sA | |
| | | nD:TnD: nB:TnB: nA:TnA:sA |
| | | nD:TnD:nC:TnC:nA:TnA:sA |
| | | nE:TnE:nB:TnB:nA:TnA:sA |
| | | nE:TnE:nC:TnC:nA:TnA:sA |

Accordingly, data is communciated through the mesh network 130 until the signals are received by the surface system 110.

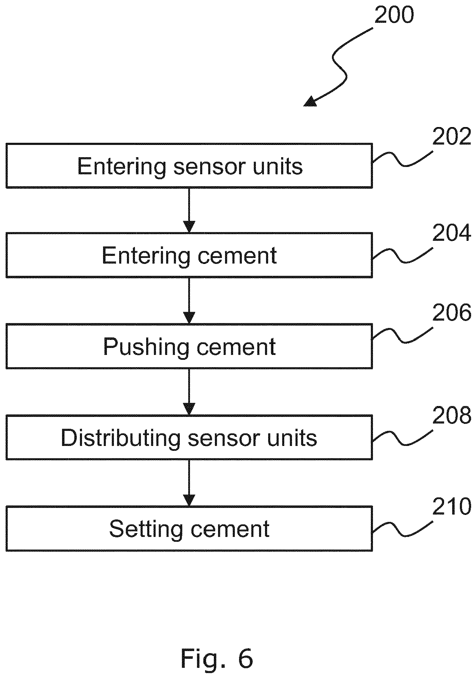

Now, with reference to Fig. 6, a method 200 for providing the downhole sensor system will be described. The method 200 is performed by a first step 202 of providing a slurry of non-set cement, and by adding a plurality of sensor units 10 to the slurry. The slurry may be stirred gently, such that the sensor units 10 are distributed randomly. In a subsequent step 204, the slurry of cement and the entered sensor units is entered into a casing arranged downhole in a borehole. In a following step 206, the slurry of cement and sensor units is pushed downwards, e.g. by utilising a pushing fluid. During this step, the cement will flow into and upwards in the annulus formed between the casing and the walls of the borehole, and the sensor units will be distributed, in step 208, randomly in the annulus. Once the cement is set, in step 210, the position of each sensor unit is fixed in the cement, and hence relative to the casing, whereby the sensor units are ready to monitor cement characteristics upon activation.

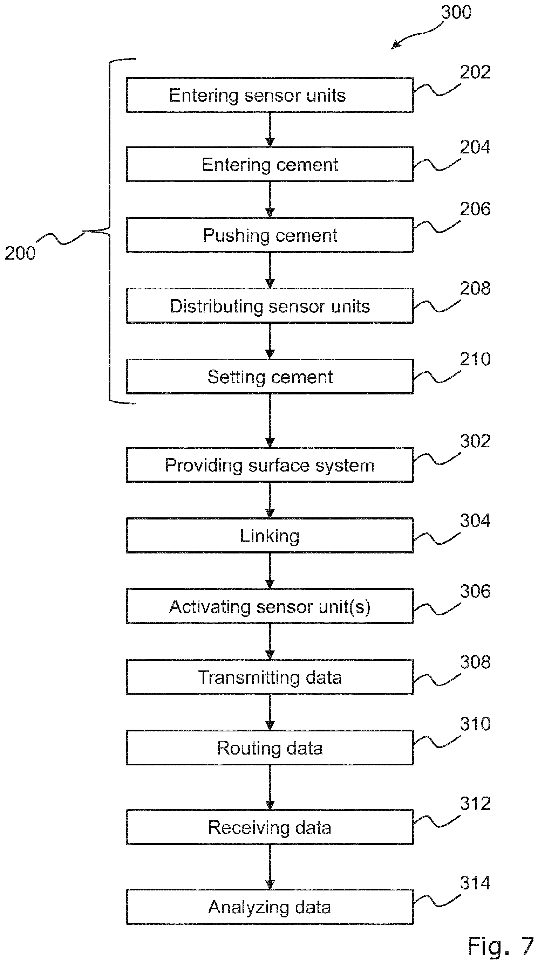

As explained previously, the sensor units are activated to monitor and determine cement charcteristics. A method 300 performed for the purpose of such monitoring is schematically shown in Fig. 7. As the method 300 requires the provision of a downhole sensor system, intially the method 200 described above is performed.

Additionally, in step 302, a surface system 110 is provided. The surface system 110, described above with respect to Fig. 3, is configured to communicate with the sub-surface system 120, i.e. the sensor system provided by performing the method 200 and comprising the downhole sensor units 10 being entered in the cement.

In step 304, the surface system 110 is linked to the sub-surface system 120. Linking is preferably performed during configuration and programming of the respective sensor units 10 as well as the surface system 110, and step 304 may thus correspond to a confirmation step. As described above, step 304 may be performed by sending a verification signal from the surface system 110, and requesting replies from each sensor unit 10. Once the replies are received, the sensor system 100 is verified and ready for operation. Each reply signal is routed via the sensor units 10 in accordance with the description relating to Fig. 5. The sensor units 10 thus form a mesh network.

During operation of the sensor system 100, at least one of said sensor units 10 is activated in step 306. Activation may either occur as a response to a control signal transmitted from the surface system 110, or the sensor units 10 may be programmed to be activated at pre-determined time intervals. For example, each sensor unit 10 may be programmed to "wake up" at specific times, such as at 12.00 am each day, each Monday, each first day of the month etc. The time intervals between subsequent activations may preferably be done prior to arranging the sensor units 10 downhole, or by transmitting a control signal from the surface system 110. When a sensor unit 10 is activated, in step 308 it transmits a sonar pulse by means of its associated transducer, and receives an echo signal which depends on the characteristics of the surrounding cement. The received signal is preferably processed by the sensor unit 10, and the resulting data, corresponding to cement characteristics, is transmitted by means of the wireless transceiver. As is evident, during activation further parameters may be measured as well such as temperature and/or pressure, and data corresponding to such measurements may be included in the transmitted signal in step 308.

As the data signal is transmitted, the method 300 includes a step 310 of routing the data signal such that it eventually reaches the surface system 110. If the sensor units 10 are distributed the entire way up to the location of the surface system 110, routing may be achieved entirely by the sensor units 10. However, in some cases it is only a part of the entire casing which is cemented using the herein described technique of entering sensor units. In such case, a data collecting tool may be provided downhole above the sensor units, either temporarily or permanently, which data collecting tool receives the routed data signals and forwards the received data signals to the surface system 110, either by wire or wirelessly.

Each sensor unit 10 is therefore programmed to, upon activation, also listen for transmitted signals and, upon receiving an already transmitted signal, re-send the signal. Any transmitted data signal will automatically be routed through the mesh network until it is received by the surface system 110. Efficient routing may e.g. be achieved by utilising a protocol as described in the above table, whereby any data signal transmitted will not only contain the measured data, but also timestamps and information about which sensor units 10 are used for routing. Each sensor unit 10 is thereby configured to relay data for the mesh network. In order to ensure the integrity of the data path, the network formed by the sensor units 10 is configured to apply a self-healing algorithm, e.g. Shortest Path Bridging. Should one or more sensor units 10 for some reason be damaged or by other means be non-functional, the network is configured to automatically self-heal by re-routing the data to existing and functional data paths.

In step 312, the data signals are received by the surface system 110, and data processing may be performed in order to convert the information of the data signal to readable values corresponding to the measured cement characteristics.

Hence, in step 314 the data is analysed, which also may include position detection of the sensor units 10 being repsonsible for the respective data.

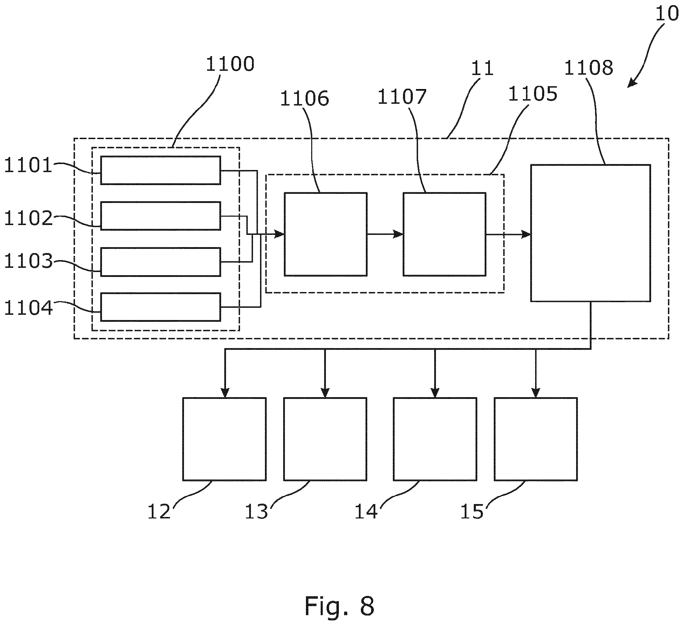

In Fig. 8, one embodiment of the self-powering device 11 is shown in further detail. The self-powering device 11 is configured to provide electrical power to the various electrical components of the sensor unit 10 by harvesting energy while the sensor unit 10 are transported in the cement downhole. The self-powering device 11 therefore comprises an energy harvesting module 1100. The harvesting module 1100 may be selected from the group comprising a vibrating member 1101, a piezoelectric member 1102, a magnetostrictive member 1103 and a thermoelectric generator 1104. As is shown in Fig. 8, any of these members is possible. In case of a vibrating member 1101, a piezoelectric member 1102 or a magnetostrictive member 1103, the energy harvetsing module 1100 is configured to convert mechanical vibrations of the surrounding environment, such as in the cement or in downhole fluid, to electrical energy. In the case of a thermoelectric generator 1104, such as a Peltier element, the harvesting module 1100 is configured to convert thermal energy of the surrounding energy to electrical energy.

The harvested energy is preferably supplied to a rectifier 1105. The rectifier 1105 is configured to provide a direct voltage and comprises a switching unit 1106 and a rectifier 1107. It should be noted that the position of the switching unit 1106 and the rectifier 1107 could be changed, such that the rectifier 1107 is directly connected to the harvesting module 1100. As is shown in Fig. 8, the rectifier 1107 is preferably connected to a capacitor 1108 for storing the harvested energy; the electrical components 12-15 of the sensor unit 10 are therefore connected to the capacitor 1108 forming the required power source or storage buffer. Optionally, the self-powering device 11 is further provided with an amplifier (not shown) and/or control electronics (not shown) for the switching unit 1106. Additional capacitors may also be provided.

By fluid or well fluid is meant any kind of fluid that may be present in oil or gas wells downhole, such as natural gas, oil, oil mud, crude oil, water etc. By gas is meant any kind of gas composition present in a well, completion, or open hole, and by oil is meant any kind of oil composition, such as crude oil, an oil-containing fluid etc. Gas, oil, and water fluids may thus all comprise other elements or substances than gas, oil, and/or water, respectively.

By an annular barrier is meant an annular barrier comprising a tubular metal part mounted as part of the well tubular metal structure and an expandable metal sleeve surrounding and connected to the tubular part defining an annular barrier space.

By a well tubular structure, casing, liner, tubing or production casing is meant any kind of pipe, tubing, tubular, liner, string etc. used downhole in relation to oil or natural gas production.

In the event that the tool is not submergible all the way into the casing, a downhole tractor can be used to push the tool all the way into position in the well. The downhole tractor may have projectable arms having wheels, wherein the wheels contact the inner surface of the casing for propelling the tractor and the tool forward in the casing. A downhole tractor is any kind of driving tool capable of pushing or pulling tools in a well downhole, such as a Well Tractor®.

Although the invention has been described in the above in connection with preferred embodiments of the invention, it will be evident for a person skilled in the art that several modifications are conceivable without departing from the invention as defined by the following claims.

## Claims

1. A downhole sensor system (100), comprising:
- a plurality of sensor units (10) forming a mesh network (130), wherein each one of said sensor units (10) is positioned in a cemented annulus (2) formed between a well tubular metal structure (1) and a borehole wall (3), and at least one of said sensor units (10) is provided with a detector (16) for detecting cement characteristics of the cement in the annulus.

2. The downhole sensor system according to claim 1, wherein cement characteristics comprises acoustic impedance, and the detector (16) comprises a transducer (14) for measuring a reflected signal for determining the acoustic impedance.

3. The downhole sensor system according to claim 1 or 2, wherein each one of said sensor units (10) are randomly positioned in the cemented annulus (2).

4. The downhole sensor system according to any of the preceding claims, further comprising a sensor module (15) comprising additional sensors.

5. The downhole sensor system according to claim 4, wherein said sensor module (15) comprises a temperature sensor (15a) and/or a pressure sensor (15b).

6. The downhole sensor system according to any of the preceding claims, wherein each sensor unit (10) is configured to receive wirelessly transmitted data from an adjacent sensor unit (10), and to forward the received data to adjacent sensor units (10).

7. The downhole sensor system according to any of the preceding claims, further comprising a surface system (110) configured to receive downhole data from said sensor units (10).

8. The downhole sensor system according to claim 7, wherein said surface system (110) is further configured to determine the position of at least one sensor unit (10), and to associate said determined position with associated cement characteristics.

9. The downhole sensor system according to claim 8, wherein the surface system (110) is configured to determine the position of at least one sensor unit (10) by Monte Carlo simulation and/or Shortest Path simulation and/or acoustic pinging time of flight.

10. The downhole sensor system according to any of the preceding claims, wherein the mesh network is a self-healing mesh network.

11. A method for providing a downhole sensor system (100) according to any of the preceding claims, comprising:
- entering a plurality of sensor units (10) in non-set cement,
- entering said non-set cement into a casing (1), and
- pushing said non-set cement (4) downwards such that the cement (4) is pushed upwards in an annulus (2) formed between the casing (1) and the borehole wall (3), whereby each sensor unit (10) is positioned in said annulus (2).

12. The method according to claim 11, wherein each sensor unit (10) is randomly positioned in said annulus (2).

13. A method for determining cement characteristics, comprising:
- providing a sensor system by performing the method according to claim 11 or 12,
- activating at least one sensor unit (10) for measuring cement characteristics,
- transmitting data corresponding to said measured cement characteristics from the activated sensor unit (10) to a surface system (110) via at least one adjacent sensor unit (10), and
- analysing the received data in order to determine cement characteristics.

14. The method according to claim 13, further comprising:
- determining the position of said activated sensor unit (10), and associating said determined position with the corresponding cement characteristics received by said surface system (110).

15. The method according to claim 13 or 14, wherein activating at least one sensor unit (10) comprises transmitting a sonar pulse by means of a transducer, and receiving an echo signal.
